# FASCICULE DE BREVET EUROPEEN

(11) **EP 2 370 283 B1**
(45) Date de publication et mention de la délivrance du brevet: **13.02.2013**
(21) Numéro de dépôt: 09803834.2
(22) Date de dépôt: 10.12.2009
(51) Int. Cl.: B60K 1/04, B60S 5/06, H01M 2/10, B60L 1/04, B60L 11/18

(54) **VEHICULE AUTOMOBILE EQUIPE D'UNE BATTERIE D'ALIMENTATION QUI EST AMOVIBLE SELON UN MOUVEMENT VERTICAL ET DISPOSITIF D'INSTALLATION ET DE DEPOSE D'UNE TELLE BATTERIE**
MIT EINER DURCH EINE VERTIKALBEWEGUNG AUSBAUBAREN ENERGIEVERSORGUNGSBATTERIE VERSEHENES KRAFTFAHRZEUG UND VORRICHTUNG ZUM INSTALLIEREN UND AUSBAUEN SOLCH EINER BATTERIE
AUTOMOBILE PROVIDED WITH A POWER SUPPLY BATTERY WHICH IS REMOVABLE BY A VERTICAL MOVEMENT, AND DEVICE FOR INSTALLING AND REMOVING SUCH A BATTERY

(30) Priorité: 30.12.2008 FR 0807503
(43) Date de publication de la demande: 05.10.2011
(73) Titulaire: Renault S.A.S., 92100 Boulogne-Billancourt (FR)
(72) Inventeur: FERNANDEZ-MATEO, Jose, F-78120 Rambouillet (FR)
(86) Numéro de dépôt international: PCT/FR2009/052484
(87) Numéro de publication internationale: WO 2010/076457

(56) Documents cités:
- EP-A- 1 876 075
- FR-A- 2 197 353
- FR-A- 2 354 897
- JP-A- 2003 237 456
- US-A- 5 373 910
- US-A- 5 998 963
- US-A1- 2005 274 556
- US-A1- 2008 294 283

## Description

La présente invention concerne un véhicule automobile dont le moteur est alimenté, en continue ou de manière alternative, avec une batterie qui fournit une puissance électrique. La présente invention concerne donc les véhicules à moteur électrique et les véhicules à moteur hybride.

Le document US 2 005 274 556 A1 décrit un véhicule automobile dont le moteur peut être alimenté par une batterie. Cette batterie est fixée à la structure du véhicule au niveau d'un logement ménagé sous l'habitacle, entre les roues avant et arrière du véhicule. La batterie peut être installée ou retirée de la structure selon un mouvement de glissement horizontal, à la manière d'un tiroir.

Le document JP 2003 237 456 A1 décrit un véhicule automobile, du type camion, qui comporte une structure qui supporte une cabine de pilotage et qui s'étend en arrière de la cabine. Le moteur de ce véhicule peut être alimenté par une batterie contenue dans un container. Le container est fixé sur la structure, par l'intermédiaire d'un élément de réception, solidaire de la structure et qui comporte un cadre formé d'éléments longitudinaux et transversaux à la structure. Le container est disposé sur ce cadre, situé en arrière de la cabine. L'installation du container sur le cadre est mise en oeuvre selon un mouvement vertical descendant. Le container est maintenu suspendu au-dessus du cadre, c'est-à-dire au-dessus de la structure, puis baissé vers cette dernière pour être déposé sur le cadre. La dépose de la batterie est mise en oeuvre de la manière suivante : le container comporte des pieds extensibles qui peuvent prendre appui sur le sol, de chaque côté du véhicule. En allongeant les pieds, on soulève le container au-dessus de la structure ce qui permet de le déconnecter électriquement de la structure. On déplace, ensuite, la structure horizontalement, au-delà du dessous du container. Ce dernier reste sur ses pieds, au-dessus du sol.

Ce mouvement vertical d'installation et de dépose est pratique mais ne peut être mise en oeuvre que sur un véhicule qui comporte une structure équipée d'un élément de réception accessible depuis le dessus du véhicule. La batterie pouvant être extrêmement lourde, il est nécessaire de prévoir un outillage conséquent, pour son installation, sa dépose et la manutention qui suit cette dernière.

Par ailleurs, le document US 5,998,963 qui divulgue toutes les caractéristiques de la préambule de la revendication 1 et de la revendication 5 décrit une station et une méthode pour échanger et charger les batteries de véhicules électriques, le document US 5,373,910 décrit une méthode d'utilisation d'un véhicule électrique ayant plusieurs batteries de remplacement, le document FR 2 197°353 décrit un dispositif de montage de la batterie d'accumulateurs d'un véhicule électrique permettant le remplacement de cette dernière, le document FR 2°354°897 décrit un dispositif pour l'échange rapide d'une batterie d'accumulateur sur un véhicule électrique et le document US 2008/0294283 décrit une station et une méthode d'échange de batterie.

Un but de la présente invention est de proposer un véhicule automobile dont le moteur est apte à être alimenté par une batterie électrique, qui permet une installation et une dépose facile et rapide de cette batterie.

Ce but est atteint au moyen d'un véhicule automobile comportant une structure qui présente un dessous et qui supporte un moteur alimenté par une batterie d'alimentation amovible, ladite structure comportant, en outre, un élément de réception de ladite batterie et des moyens de fixation de ladite batterie sur ledit élément de réception, ladite batterie pouvant être installée ou retirée dudit élément de réception selon un mouvement vertical.

Selon l'invention, ladite structure, ledit élément de réception et lesdits moyens de fixation sont conformés de manière à permettre l'installation de ladite batterie dans ledit élément de réception, depuis le dessous de ladite structure, selon un mouvement ascendant, en direction de ladite structure et la dépose de ladite batterie sous ladite structure, selon un mouvement descendant, dans la direction opposée à ladite structure.

De cette façon, la batterie peut être disposée sous la structure du véhicule, au niveau de l'habitacle, par exemple, sans qu'il y ait nécessairement un accès par le dessus de la batterie.

Selon l'invention, ladite batterie comporte un boîtier qui présente deux surfaces verticales, opposées, dans chacune desquelles est ménagé au moins un évidement qui présente une surface d'appui supérieure, et lesdits moyens de fixation comportent au moins deux doigts formant pêne qui présentent des extrémités libres et qui sont mobiles entre une position d'installation, dans laquelle lesdites extrémités libres sont éloignées l'une de l'autre ou sont aptes à venir en appui contre lesdites surfaces verticales dudit boîtier, et une position de fixation dans laquelle lesdites extrémités libres sont rapprochées l'une de l'autre et sont aptes à prendre appui contre ladite surface d'appui supérieure de chacun desdits évidements, de manière à suspendre ledit boîtier entre lesdits doigts.

Selon l'invention, ledit boîtier comporte sur chacune desdites surfaces verticales, une rainure de guidage, sensiblement verticale et sécante avec ledit évidement. Avantageusement, le véhicule comporte des moyens de verrouillage desdits moyens de fixation.

Selon un mode de réalisation, lesdits moyens de verrouillage comportent un élément d'entraînement, solidaire d'un desdits doigts, et un élément de verrouillage qui tire sur ledit élément d'entraînement pour maintenir ledit doigt enfoncé dans ledit évidement.

Avantageusement, les doigts formant pêne sont montés sur ledit élément de réception par l'intermédiaire de moyens de rappel qui exercent sur chacun desdits doigts une force de rappel qui maintient lesdits doigts dans ladite position de fixation.

La présente invention concerne également un dispositif d'installation et de dépose d'une batterie amovible sur un élément de réception équipant la structure d'un véhicule selon l'invention. Ce dispositif comporte une plateforme horizontale apte à être disposée sous ladite structure et des moyens de déblocage desdits moyens de fixation qui permettent d'amener lesdits moyens de fixation de ladite position de fixation à ladite position d'installation, par un déplacement vertical ascendant de ladite plateforme et/ou desdits moyens de déblocage vers ladite structure, moyennant quoi ladite batterie se désolidarise de ladite structure et prend appui sur ladite plateforme.

Selon un mode de réalisation particulier, les moyens de déblocage comportent deux tiges verticales montées sur ladite plateforme.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une coupe longitudinale d'un véhicule selon un mode de réalisation particulier de la présente invention ;
- la Figure 2 représente une vue en perspective du côté d'un mode de réalisation particulier de l'élément de réception sur lequel est monté un mode de réalisation particulier de la batterie ;
- la Figure 3 représente une vue schématique en coupe selon un plan vertical, passant l'axe III-III du mode de réalisation précédent, la batterie étant en cours d'installation ;
- la Figure 4 représente une vue schématique en coupe du mode de réalisation précédent, la batterie étant montée sur l'élément de réception et la manoeuvre de dépose débutant ; et
- la Figure 5 représente plus en détails les moyens de fixation du mode de réalisation représenté sur les figures précédentes.

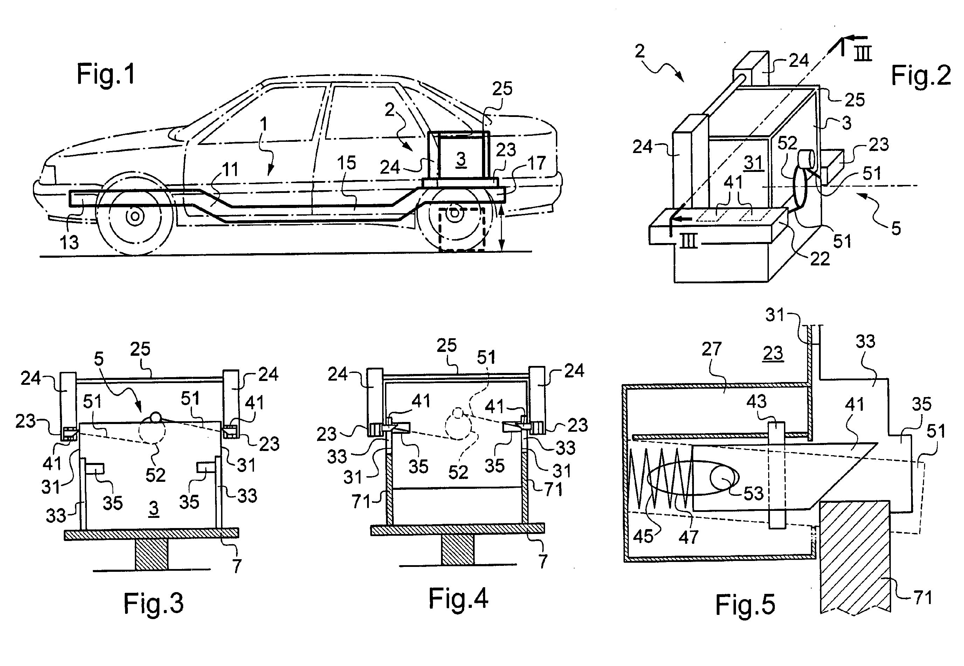

La Figure 1 représente un véhicule automobile qui comporte une structure, ou châssis, 1 sur laquelle est fixé un élément de réception 2. La structure 1 comporte deux longerons 11 qui s'étendent longitudinalement au véhicule et deux ou plusieurs traverses (non visibles) qui s'étendent transversalement au véhicule. Chaque longeron 11 présente une portion avant 13, située au niveau du capot avant, une portion médiane 15, située sous l'habitacle et une portion arrière 17, située sous le coffre arrière. Dans le mode de réalisation représenté, l'élément de réception 2 est monté sur la structure 1 au niveau de la portion arrière 17 de cette dernière. Cette position n'est pas limitative de la présente invention. En effet, l'élément de réception 2 peut être monté sur n'importe quelle portion de la structure 1, du fait de son installation et de sa dépose qui sont mises en oeuvre selon un mouvement vertical (selon la direction Z, représentée sur la figure 1) qui a lieu entre le sol S, sur lequel repose les roues du véhicule, et la structure 1. Ainsi, sous l'élément de réception 2, la structure présente une ouverture (non représentée) qui permet l'installation et la dépose de la batterie 3. Sur la figure 1, la batterie 3 déposée sur le sol S est représentée en pointillés.

Dans le cas de la présente invention, la batterie 3 est une unité qui apporte de l'énergie au moteur pour le faire fonctionner pendant une durée limitée. La batterie 3, du fait de sa taille et de son poids, notamment, ne peut pas être assimilée à la batterie électrique qui est présente dans tous les véhicules automobiles et qui sert au démarrage de ce dernier et à l'alimentation des réseaux électriques du véhicule et qui se recharge lors du déplacement du véhicule. L'élément de réception 2 et la batterie 3 seront plus amplement détaillés en référence aux figures suivantes.

En référence aux figures 1 et 2, l'élément de réception 2 comporte deux supports latéraux 22 qui sont montés chacun sur un longeron 11 de la structure 1. Chacun des supports latéraux 22 comporte un bras longitudinal 23, monté longitudinalement sur le longeron 11, et un bras vertical 24, solidaire d'une extrémité du bras longitudinal 23. Les deux supports 22 forment donc chacun un L et sont disposés l'un à côté de l'autre, les deux bras verticaux 24 étant en regard. Les deux supports 22 sont reliés par une cage 25 qui est montée à l'extrémité libre des bras verticaux 24 et qui s'étend au-dessus des bras longitudinaux 23. Cette cage 25 et les supports 22 définissent un élément de réception 2 de la batterie 3 qui forme un logement pour la batterie 3.

Comme représenté sur les figures 1 et 2, la batterie 3 présente deux surfaces verticales 31, ou parois verticales, opposées. Lorsque la batterie 3 est montée dans l'élément de réception 2, la face supérieure de la batterie 3 est disposée à proximité de la cage 25. Une portion de la batterie 3 dépasse en dessous de l'élément de réception 2. L'élément de réception 2 comporte des moyens de fixation qui comportent quatre doigts formant pêne 41, montés en regard deux à deux sur les bras longitudinaux 23 et des moyens de verrouillage 5 de ces moyens de fixation. Les doigts de fixation 41 s'étendent transversalement à l'élément de réception 2, selon une direction perpendiculaire aux bras longitudinaux 23 et dans un plan perpendiculaire aux bras verticaux 24. Les moyens de verrouillage 5 comportent quatre éléments d'entraînement 51, reliés deux à deux aux doigts 41 qui sont disposés en regard l'un de l'autre, chacun sur une face verticale 31 de la batterie 3. Ces éléments d'entraînement 51 sont couplés à un élément de verrouillage rotatif 52 qui sera plus amplement décrit ultérieurement. Une extrémité de chacun des éléments d'entraînement 51 est connectée à un doigt 41 tandis que l'autre extrémité est connectée à l'élément de verrouillage 52. Cet élément de verrouillage 52 est monté mobile en rotation autour d'un axe horizontal X. La rotation de l'élément de verrouillage 52 autour de l'axe X tire simultanément les deux éléments d'entraînement 51 qui lui sont connectés, dans des sens opposés. La rotation précitée de l'élément de verrouillage 52 rapproche donc l'une de l'autre, les extrémités des éléments d'entraînement 51 qui sont connectées à cet élément de verrouillage 52.

Comme représenté sur les figures 2 à 4, la batterie 3 comporte quatre rainures verticales 33, ménagées deux à deux sur les faces verticales opposées 31. Ces rainures verticales 33 sont sécantes chacune avec un évidement 35, transversal à la batterie 3 et sensiblement perpendiculaire à la rainure 33. Tous les évidements 35 sont situés à une même hauteur le long des rainures verticales 33.

Comme représenté sur la figure 3, lors de l'installation de la batterie 3 dans l'élément de réception 2 (la structure 1 n'a pas été représentée, par souci de simplification), la batterie 3 est installée sur un plateau ou plateforme 7 du type monte et baisse, c'est-à-dire un plateau mobile en translation verticale selon la direction Z (voir figure 1). Un simple plateau équipé d'un parallélogramme permettant de le soulever et de l'abaisser peut convenir. Les faces verticales 31 sont disposées parallèlement aux bras longitudinaux 23 des supports 22. Les doigts 41 qui équipent chacun des bras longitudinaux 23 sont disposés en face-à-face et présentent des extrémités libres distantes d'une distance donnée d1 (voir figure 4), mesurée selon la direction transverse au véhicule (c'est-à-dire dans la direction perpendiculaire aux bras longitudinaux 23 des supports 22). Le plateau 7 est disposé sous le véhicule puis monté vers la structure 1, en direction de l'élément de réception 2. Les extrémités libres des doigts 41 disposés en face-à-face sont écartées les unes des autres, du fait de leur contact avec la surface des faces verticales 31. Lorsque la batterie 3 est soulevée à une hauteur au-dessus du sol S, telle que les doigts 41 arrivent au niveau des évidements 35, les doigts 41 pénètrent dans ces derniers. La distance séparant les extrémités libres de doigts 41 est alors égale à d1, comme précité. Comme représenté sur la figure 4, la batterie 3 est ainsi suspendue par les doigts 41 qui prennent appui sur la face supérieure des évidements 35, comme plus amplement décrit en référence à la figure 5.

La figure 5 représente plus en détails les moyens de fixation 4 et les moyens de verrouillage 5. Sur la figure 5, les moyens de fixation sont dans une position intermédiaire. Les doigts 41 comportent une extrémité libre biseautée. Ainsi, en coupe selon l'axe III-III, le bord longitudinal supérieur des doigts 41 est plus long que le bord longitudinal inférieur. Chacun des doigts 41 est monté dans un logement 27, ménagé dans un bras longitudinal 23 d'un support 22. Ce logement 27 s'étend transversalement au bras longitudinal 23 et présente une ouverture disposée sur la face interne du bras longitudinal 23 (c'est-à-dire la face du bras longitudinal 23 qui fait face à l'autre bras longitudinal 23). Un ressort de rappel 45 est disposé longitudinalement dans le fond du logement 27 de manière à repousser le doigt 41 en dehors du logement 27, vers l'autre support 22 disposé en regard de celui considéré. Le doigt 41 présente une lumière longitudinale 47, disposée à proximité de son extrémité logée dans le logement 27 et comporte une butée transversale 43, située entre l'extrémité libre du doigt 41 et la lumière longitudinale 47 précitée. La lumière 47 et la butée 43 sont disposées dans le logement 27. Un arbre 53, transversal à l'élément d'entraînement 51, traverse la lumière 47. Cet arbre 53 est solidaire de l'élément d'entraînement 51. Sur la figure 5, on voit que la rainure verticale 33 se prolonge au-dessus de l'évidement 35. En position de fixation, l'extrémité libre du doigt 41 est logée dans l'évidement 35. La batterie 3 est soutenue par les doigts 41 qui prennent appui contre la face horizontale supérieure 351 de l'évidement 35. L'extrémité libre du doigt 41 est distante du fond vertical de l'évidement 35. Dans la position de fixation, l'arbre 53 est disposé au niveau de l'extrémité de la lumière 47 qui est la plus proche de la sortie du logement 27. En tournant l'élément de verrouillage 52, l'opérateur tire simultanément sur deux éléments d'entraînement 51. Ces deux éléments d'entraînement 51 sont reliés chacun à un doigt 41 situé sur un support 22 différent. Ces deux doigts 41 sont montés en regard, chacun sur un support 22. La rotation de l'élément de verrouillage 52 autour de l'axe X, tire l'élément d'entraînement 51 vers le support 22 opposé. L'arbre 53 étant solidaire de l'élément d'entraînement 51 et en butée contre l'extrémité de la lumière 47 la plus proche de l'ouverture du logement 27, le déplacement de l'élément d'entraînement 51 engendre le déplacement du doigt 41 vers le fond de l'évidement 35. Lorsque le ressort 45 est détendu et que la butée 43 vient en contact avec la paroi verticale du bras longitudinal 22, autour de l'ouverture du logement 27, le doigt 41 est en position verrouillée. L'élément de verrouillage 52 est bloqué du fait des forces contraires exercées sur lui par les éléments d'entraînement 51. La batterie 3 est ainsi parfaitement bloquée en position. Les ressorts 45 n'étant plus sollicités, les doigts 41 restent en position et ainsi, même en cas de chocs ou des secousses, la batterie 3 ne risque pas de tomber. Par ailleurs, la longueur du doigt 41 insérée dans l'évidement 35 et prenant appui sur la face supérieure horizontale 351 de ce dernier étant plus grande que dans la position de fixation, la batterie 3 est mieux maintenue, en position verrouillée. Les extrémités libres des doigts 41 sont, en position verrouillée, distantes d'une distance inférieure à d1.

Le fonctionnement du dispositif de l'invention va maintenant être expliqué en référence aux figures 1 à 5.

L'installation de la batterie 3 va maintenant être décrite en référence à la figure 3. Comme expliqué précédemment, la batterie 3 est posée sur un plateau 7 disposé sous l'élément de réception 2. On fait monter le plateau 7, manuellement ou automatiquement. Au contact des parois verticales 31, les doigts 41 disposés en face à face s'écartent l'un de l'autre, selon la direction transversale au véhicule. Au niveau des évidements 35, les ressorts 45 qui exercent en permanence une force de rappel sur les doigts 41 écartés, repoussent les doigts 41 vers le fond vertical de ces évidements 35, ce qui maintient et bloque la batterie 3.

La dépose de la batterie 3 va maintenant être décrite en référence aux figures précédentes. La batterie 3 est montée dans l'élément de réception 2 et les moyens de fixation sont dans leur position verrouillée. L'opérateur débloque dans un premier temps les moyens de fixation. Pour ce faire, il tourne l'élément de verrouillage 52 de manière à écarter, l'une de l'autre, les extrémités des éléments d'entraînement 51 qui sont connectées à cet élément de verrouillage 52. Chaque élément d'entraînement 51 recule vers le support 22 et entraîne l'arbre 53 en déplacement dans la lumière 47. Lorsque l'arbre 53 vient en butée contre l'extrémité de la lumière 47 qui est disposée la plus au fond du logement 27, l'arbre 53 repousse le doigt 41 vers le fond du logement 27. Le doigt 41 recule dans l'évidement 35, vers l'ouverture de ce dernier, située au niveau de la face verticale 31. Le ressort 45 continue d'exercer une force de rappel qui repousse le doigt 41 vers l'évidement 35 et, de ce fait, la batterie 3 est toujours suspendue sur les doigts 41.

Comme représenté sur la figure 3, on dispose alors un plateau ou plateforme 7 qui comporte des tiges verticales 71 (voir figure 4) sous l'élément de réception 2. En montant le plateau 7 ou en descendant le véhicule, on fait pénétrer les tiges verticales 71 dans les rainures verticales 33. Lorsque les tiges 71 parviennent en butée contre les extrémités biseautées des doigts 41, comme représenté sur la figure 5, les doigts 41 sont repoussés vers le support 22, par les tiges 71 qui poursuivent leur mouvement ascendant, entraînées par le plateau 7. Chacun des doigts 41 est ainsi repoussé dans son logement 27 ; le ressort 45 est maintenu comprimé par le doigt 41, lui-même repoussé par la tige 71. La tige 71 pénètre verticalement jusqu'au fond de la rainure 33, au delà de l'évidement 35. Lorsqu'elle vient en butée contre le fond de la rainure 33, la batterie 3 repose sur le plateau 7 et le mouvement vertical ascendant de ce dernier est stoppé. Le plateau 7 descend ; la batterie 3 est alors soumise à son poids est reste sur le plateau 7. Les tiges verticales 71 empêchent les doigts 41 de revenir dans leur position de fixation en les repoussant vers le logement 27 et en bouchant l'entrée des évidements 35. Pendant que le plateau 7 descend, les doigts 41 restent au contact des tiges verticales 71 qui les maintiennent en position d'installation, écartés l'un de l'autre, selon la direction transverse au véhicule et repoussés vers leur logement 27. Lorsque la batterie 3 est totalement disposée sous la structure 1, les doigts 41 reviennent en position de fixation. La batterie 3 est déposée et peut être changée.

Les manoeuvres de dépose et d'installation précitées peuvent être facilement automatisées rendant le remplacement de la batterie 3 facile et rapide. Le véhicule peut ainsi parcourir des distances élevées en remplaçant sa batterie au lieu de faire le plein de carburant comme c'est le cas pour un véhicule à moteur thermique.

## Revendications

1. Véhicule automobile comportant une structure (1) qui présente un dessous et qui supporte un moteur alimenté par une batterie (3) d'alimentation amovible, ladite structure (1) comportant, en outre, un élément de réception (2) de ladite batterie (3) et des moyens de fixation (41 ; 35) de ladite batterie (3) sur ledit élément de réception (2), ladite batterie (3) pouvant être installée ou retirée dudit élément de réception (2), selon un mouvement vertical, ladite structure (1), ledit élément de réception (2) et lesdits moyens de fixation (41 ; 35) étant conformés de manière à permettre l'installation de ladite batterie (3) dans ledit élément de réception (2), depuis le dessous de ladite structure (1), selon un mouvement ascendant, en direction de ladite structure, et la dépose de ladite batterie (3), sous ladite structure (1), selon un mouvement descendant, dans la direction opposée à ladite structure (1), ladite batterie (3) comportant un boîtier qui présente deux surfaces verticales (31), opposées, dans chacune desquelles est ménagé au moins un évidement (35) qui présente une surface d'appui supérieure (351) et lesdits moyens de fixation comportant au moins deux doigts formant pêne (41) qui présentent des extrémités libres et qui sont mobiles entre une position d'installation dans laquelle lesdites extrémités libres sont éloignées l'une de l'autre ou sont aptes à venir en appui contre lesdites surfaces verticales (31) dudit boîtier (3), et une position de fixation, dans laquelle lesdites extrémités libres sont rapprochées l'une de l'autre et sont aptes à prendre appui contre ladite surface d'appui supérieure (351) de chacun desdits évidements (35), de manière à suspendre ledit boîtier (3) entre lesdits doigts (41), **caractérisé en ce que** ledit boîtier comporte sur chacune desdites surfaces verticales (31), une rainure de guidage (33), sensiblement verticale et sécante avec ledit évidement (35).

2. Véhicule selon la revendication précédente, **caractérisé en ce qu'**il comporte des moyens de verrouillage (5) desdits moyens de fixation (41 ; 35).

3. Véhicule selon la revendication 2, **caractérisé en ce que** lesdits moyens de verrouillage comportent au moins un élément d'entraînement (51), solidaire d'un desdits doigts (41) et un élément de verrouillage (52) qui tire ledit élément d'entraînement (51) pour maintenir ledit doigt (41), enfoncé dans ledit évidement (35).

4. Véhicule automobile selon l'une quelconque des revendications 1 à 3, **caractérisé en ce que** lesdits doigts formant pêne (41) sont montés sur ledit élément de réception (2) par l'intermédiaire de moyens de rappel (45) qui exercent sur chacun desdits doigts (41) une force de rappel qui maintient lesdits doigts (41) dans ladite position de fixation.

5. Dispositif (7) d'installation et de dépose d'une batterie amovible (3) sur un élément de réception (2) équipant la structure d'un véhicule selon l'une quelconque des revendications précédentes, ledit dispositif comportant une plateforme horizontale (7) apte à être disposée sous ladite structure (1) et des moyens de déblocage desdits moyens de fixation (41 ; 35) qui permettent d'amener lesdits moyens de fixation de ladite position de fixation à ladite position d'installation par un déplacement vertical ascendant de ladite plateforme (7) et/ou desdits moyens de déblocage vers ladite structure (1), moyennant quoi ladite batterie (3) se désolidarise de ladite structure (1) et prend appui sur ladite plateforme (7), **caractérisé en ce que** lesdits moyens de déblocage comportent deux tiges verticales (71) montées sur ladite plateforme (7).

## Claims

1. Motor vehicle comprising a structure (1) which has an underside and which supports a motor powered by a removable power supply battery (3), the said structure (1) further comprising a housing element (2) for the said battery (3) and means (41; 35) of attaching the said battery (3) to the said housing element (2), it being possible for the said battery (3) to be installed or removed from the said housing element (2) in a vertical movement, the said structure (1), the said housing element (2) and the said means (41; 35) of attachment being configured in such a way as to allow the said battery (3) to be installed in the said housing element (2) from the underside of the said structure (1), in an upwards movement towards the said structure, and for the said battery (3) to be set down underneath the said structure (1) in a downwards movement in the direction away from the said structure (1), the said battery (3) comprising a casing which has two opposed vertical surfaces (31), in each of which is formed at least one recess (35) that has an upper bearing surface (351) and the said means of attachment comprise at least two bolt-forming fingers (41) which have free ends and are able to move between an installation position in which the said free ends are far apart from one another or are able to come to rest against the said vertical surfaces (31) of the said casing (3), and an attachment position in which the said free ends are closer together and are able to bear against the said upper bearing surface (351) of each of the said recesses (35) so as to suspend the said casing (3) between the said fingers (41), **characterized in that** the said casing on each of the said vertical surfaces (31) comprises a substantially vertical guide groove (33) secant with the said recess (35).

2. Vehicle according to the preceding claim, **characterized in that** it comprises locking means (5) for locking the said means (41; 35) of attachment.

3. Vehicle according to Claim 2, **characterized in that** the said locking means comprise at least one drive element (51) secured to one of the said fingers (41), and a locking element (52) which pulls the said drive element (51) to keep the said finger (41) pushed into the said recess (35).

4. Motor vehicle according to any one of Claims 1 to 3, **characterized in that** the said bolt-forming fingers (41) are mounted on the said housing element (2) via return means (45) which exert on each of the said fingers (41) a return force that keeps the said fingers (41) in the said attachment position.

5. Device (7) for installing and removing a removable battery (3) on a housing element (2) with which the structure of a vehicle according to any one of the preceding claims is equipped, the said device comprising a horizontal platform (7) that can be arranged under the said structure (1) and means of unfastening the said means (41; 35) of attachment that allows said means of attachment to be brought from the said attachment position into the said installation position through an upwards vertical movement of the said platform (7) and/or of the said unfastening means towards the said structure (1), by means of which the said battery (3) is detached from the said structure (1) and rests on the said platform (7), **characterized in that** the said unfastening means comprise two vertical rods (71) mounted on the said platform (7).

## Patentansprüche

1. Kraftfahrzeug, das einen Aufbau (1) aufweist, der eine Unterseite hat und einen Motor trägt, welcher von einer entfernbaren Versorgungsbatterie (3) versorgt wird, wobei der Aufbau (1) außerdem ein Aufnahmeelement (2) für die Batterie (3) und Befestigungseinrichtungen (41; 35) der Batterie (3) am Aufnahmeelement (2) aufweist, wobei die Batterie (3) gemäß einer senkrechten Bewegung in das Aufnahmeelement (2) eingebaut und daraus entfernt werden kann, wobei der Aufbau (1), das Aufnahmeelement (2) und die Befestigungseinrichtungen (41; 35) gestaltet sind, um den Einbau der Batterie (3) in das Aufnahmeelement (2) von der Unterseite des Aufbaus (1) gemäß einer Aufwärtsbewegung in Richtung des Aufbaus und den Ausbau der Batterie (3) unter dem Aufbau (1) gemäß einer Abwärtsbewegung in der dem Aufbau (1) entgegengesetzten Richtung zu ermöglichen, wobei die Batterie (3) ein Gehäuse aufweist, das zwei gegenüberliegende senkrechte Flächen (31) hat, in jeder von denen mindestens eine Aussparung (35) angeordnet ist, die eine obere Auflagefläche (351) hat, und die Befestigungseinrichtungen mindestens zwei einen Riegel (41) formende Finger aufweist, die freie Enden haben und zwischen einer Einbaustellung, in der die freien Enden voneinander entfernt sind oder gegen die senkrechten Flächen (31) des Gehäuses (3) in Auflage kommen können, und einer Befestigungsstellung beweglich sind, in der die freien Enden einander angenähert sind und gegen die obere Auflagefläche (351) jeder der Aussparungen (35) in Auflage kommen können, um das Gehäuse (3) zwischen den Fingern (41) aufzuhängen, **dadurch gekennzeichnet, dass** das Gehäuse auf jeder der senkrechten Flächen (31) eine Führungsrille (33) aufweist, die im Wesentlichen senkrecht ist und die Aussparung (35) schneidet.

2. Fahrzeug nach dem vorhergehenden Anspruch, **dadurch gekennzeichnet, dass** es Verriegelungseinrichtungen (5) der Befestigungseinrichtungen (41; 35) aufweist.

3. Fahrzeug nach Anspruch 2, **dadurch gekennzeichnet, dass** die Verriegelungseinrichtungen mindestens ein Antriebselement (51), das fest mit einem der Finger (41) verbunden ist, und ein Verriegelungselement (52) aufweisen, das am Antriebselement (51) zieht, um den Finger (41) in die Aussparung (35) eingedrückt zu halten.

4. Kraftfahrzeug nach einem der Ansprüche 1 bis 3, **dadurch gekennzeichnet, dass** die einen Riegel formenden Finger (41) auf das Aufnahmeelement (2) mittels Rückstelleinrichtungen (45) montiert werden, die auf jeden der Finger (41) eine Rückstellkraft ausüben, die die Finger (41) in der Befestigungsstellung hält.

5. Vorrichtung (7) zum Ein- und Ausbau einer entfernbaren Batterie (3) auf einem Aufnahmeelement (2), das zum Aufbau eines Fahrzeugs nach einem der vorhergehenden Ansprüche gehört, wobei die Vorrichtung eine waagrechte Plattform (7), die unter dem Aufbau (1) angeordnet werden kann, und Freigabeeinrichtungen der Befestigungseinrichtungen (41; 35) aufweist, die es ermöglichen, die Befestigungseinrichtungen durch eine senkrechte Aufwärtsbewegung der Plattform (7) und/oder der Freigabeeinrichtungen zum Aufbau (1) hin aus der Befestigungsstellung in die Einbaustellung zu bringen, wodurch die Batterie (3) sich vom Aufbau (1) löst und auf der Plattform (7) aufliegt, **dadurch gekennzeichnet, dass** die Freigabeeinrichtungen zwei senkrechte Stangen (71) aufweisen, die auf die Plattform (7) montiert sind.
